# EUROPEAN PATENT SPECIFICATION

(11) **EP 2 380 787 B1**
(45) Date of publication and mention of the grant of the patent: **03.10.2012**
(21) Application number: 10160577.2
(22) Date of filing: 21.04.2010
(51) Int. Cl.: B60R 21/34

(54) **Hinge Mechanism**
Scharniermechanismus
Mécanisme de charnière

(43) Date of publication of application: 26.10.2011
(73) Proprietor: Volvo Car Corporation, 405 31 Göteborg (SE)
(72) Inventor: Landholm, Robert, 45991, Ljungskile (SE); Fredriksson, Anders, 41467, Göteborg (SE); Lindmark, Peter, 42243, Hisings Backa (SE)
(74) Representative: Widahl, Jenny Marie

(56) References cited:
- EP-A1- 2 106 976
- EP-A2- 1 759 937
- EP-B1- 1 194 824
- EP-B1- 1 216 171
- DE-A1-102004 030 996
- JP-A- 2004 276 717

## Description

### TECHNICAL FIELD

The invention relates to a hinge mechanism for a bonnet of a vehicle.

### BACKGROUND OF THE INVENTION

If a vehicle, such as a car, is involved in an accident, in which the front part of the vehicle hits a pedestrian etc, it is not uncommon that the pedestrian is thrown onto the bonnet of the vehicle and that the head of the pedestrian impacts on the bonnet. The bonnet is normally connected to the vehicle body by means of hinges, one at each side. In order to reduce the personal injuries, there is a desire, and in some countries also a legal requirement, that the hinges should be collapsible in such a situation.

In order to reduce the severity of these accidents, it is known to use a deployable bonnet, e.g. by raising the rear part of the bonnet to an "impact position", a so called deployed position, such that the distance between the bonnet and any hard engine parts is increased. The bonnet may be lifted to the deployed position by means of an inflatable member such as an airbag.

Further, if the vehicle is involved in a frontal collision, there is a risk that the bonnet will intrude into the windshield of the vehicle as a result of the collision forces. There is therefore a desire, and in some countries also a legal requirement, that the hinges should be strong enough to prevent the bonnet from intruding into the windshield. For a deployable bonnet, it is preferred that intrusion is prevented both for the bonnet being in a normal closed position and the deployed position.

Legal requirements are for example given in FMVSS 219, Windshield Zone Intrusion, for the USA and EU Directive 2003/102/EC and 2004/90/EC for the EU.

Document JP 2004276717 A discloses a bonnet hinge capable of suppressing a rearward movement of the bonnet. A hook part engages with a hinge plate of the hinge bracket. When instead the impact is applied from above, the hook part is deformed while it is engaged with a base plate of the hinge bracket. EP 1 759 937 A discloses a hinge mechanism according to the preamble of claim 1.

A known drawback with hinge mechanisms of many prior art solutions is that they involve many different parts, which make them heavy and require large packaging volume, as well as making them expensive and difficult to mount in the vehicle at the production facility.

As may be realized from the above, there is a desire for an improved hinge mechanism, which is collapsible in case of a pedestrian crash and yet is strong enough to withstand the forces of a frontal collision.

### SUMMARY OF THE INVENTION

The object of the present invention is to overcome or ameliorate at least one of the disadvantages of the prior art, or to provide a useful alternative.

It is desirable to provide a hinge mechanism, which is collapsible in case of a pedestrian being thrown onto the bonnet.

It is further desirable to a hinge mechanism, which yet is strong enough to prevent the bonnet from intruding into the windshield in case of a frontal collision.

It also desirable to provide a hinge mechanism comprising only a few parts.

The object above may be achieved by the invention according to claim 1.

In a first aspect of the present invention there is provided a hinge mechanism for a bonnet of a vehicle. In use, the hinge mechanism provides a hinged connection between the bonnet and the body structure of the vehicle. The vehicle has a longitudinal direction and a vertical direction. The hinge mechanism comprises:
- a first hinge member connectable to the bonnet,
- a second hinge member having a first end and a second end,
- a third hinge member connectable to the body structure.

The first end of the second hinge member is connected to the first hinge member. The third hinge member comprises a first portion and a second portion. The second end of the second hinge member is pivotally connected to the third hinge member at the second portion. The second hinge member is arranged to engage with the first portion of the third hinge member when the second hinge member is subjected to a longitudinal force, such that at least part of the longitudinal force is transferable to the first portion by means of the engagement. The first portion is adapted to take up forces in the longitudinal direction imparted on the first portion by the second hinge member. The second portion offers less resistance to collapse than the first portion in response to a vertical force.

The longitudinal force may result from a frontal collision. The force may have an oblique angle to the longitudinal direction of the vehicle, but to the extent that it has a longitudinal component, it is considered as at least being partly longitudinal.

Since the second hinge member is arranged to engage with the first portion of the third hinge member when the second hinge member is subjected to a longitudinal force, at least part of the longitudinal force is transferable to the first portion by means of the engagement. Therefore, a bonnet attached to the first hinge member, which in turn is attached to the second hinge member, is prevented from intruding into the windscreen of the vehicle.

If a pedestrian is thrown onto the bonnet, the bonnet will be subjected to a vertical force. The force from the pedestrian may have an oblique angle to the vertical direction of the vehicle, but to the extent that it has a vertical component, it is considered as at least being partly vertical. Since the second end of the second hinge member is pivotally connected to the third hinge member at the second portion, the vertical force will be transferred from the bonnet via the second hinge member to the second portion of the third hinge member. If the vertical force exceeds a certain predetermined limit, the hinge mechanism will collapse somewhere within the second portion of the third hinge member.

The pivotal connection between the second end of the second hinge member and the second portion of the third hinge member facilitates opening of the bonnet to allow access to the engine compartment for maintenance and repair. In the event that the bonnet is deployable, the pivotal connection may also be used for deploying the bonnet.

By using a first portion for taking up longitudinal forces and a second portion for taking up vertical forces, the two cases of preventing the bonnet from intruding into the windshield and providing a collapsible hinge may be separated from each other. Each portion may be configured to fulfil its function in an appropriate way. The first and second portions may be separate from each other, or they may be different regions of the same part. Normally, the first portion is located longitudinally in front of the second portion.

The second portion may comprise a weak zone, pre-determined for initiation of the collapse. The weak zone may comprise a hole, a notch, a pre-formed bending or be of a thinner material than the remainder of the second portion.

The first portion may be adapted to withstand a longitudinal force of at least 4 kN, preferably at least 10 kN, and most preferably at least 15 kN. The longitudinal force that the hinge mechanism should withstand may be given by a legal requirement.

The second portion may be arranged to collapse when subjected to a vertical force of over 2 kN, preferably over 1.5 kN, and most preferably over 1 kN. A pedestrian being thrown onto the bonnet will subject the hinge to a vertical force. If the vertical force exceeds the predetermined limit of over 2 kN, preferably over 1.5 kN, and most preferably over 1 kN, the bonnet should preferably collapse in order to take up some of the impact force. However, if the vertical force is below the predetermined limit, e.g. a person leaning against the bonnet or a cat jumping onto the bonnet, the hinge mechanism is not supposed to collapse, i.e. the bonnet should remain in its normal closed position. The force at which the hinge mechanism should collapse may be given by a legal requirement.

In an embodiment, the hinge mechanism may be arranged to allow the bonnet to be raised to a deployed position. However, it is to be noted that the hinge mechanism of the invention is suitable both for a vehicle with a normal non-deployable bonnet and a vehicle with a deployable bonnet. For a vehicle with a deployable bonnet, the hinge mechanism preferably also serves to prevent the bonnet from intruding into the windscreen when in its deployed position. This may even be a legal requirement.

The third hinge member may further comprise a base portion, which is connectable to the body structure of the vehicle. The base portion is used for attaching the hinge mechanism to the vehicle body.

The first portion and the second portion of the third hinge member may be two separate portions linked together by the base portion. In such case the first portion is adjacent to the base portion, which is also adjacent to the second portion. The first and second portions are then not directly adjacent to each other. This facilitates configuring each portion to fulfil its function in an appropriate way.

The second portion may be located vertically above at least part of the base portion when mounted in the vehicle. The collapse of the hinge mechanism, in the case of a vertical force above a certain predetermined limit, will in that case occur vertically above the base portion. The attachment of the hinge mechanism to the body structure of the vehicle may then be unaffected of the collapse. Often, both the first and second portions are located vertically above at least part of the base portion, when mounted in the vehicle.

In a particular embodiment, the first portion only has the base portion in between itself and the attachment to the body vehicle, such that the second portion does not influence the transfer of the longitudinal force between the first portion and the attachment to the body of the vehicle. This facilitates configuring each portion to fulfil its function in an appropriate way.

In an embodiment, the second hinge member and/or the first portion of the third hinge member may be formed to prevent substantial lateral movement of the second hinge member relative to the third hinge member, when engaged with each other. By substantial movement is meant a movement larger than a few millimetres. This prevents the bonnet from moving sideways in case of a frontal collision. The substantial lateral movement is prevented, when the bonnet is in its closed position. For a deployable bonnet, it is further preferred that substantial lateral movement also is prevented in the deployed position and during deployment.

The second hinge member and/or the first portion of the third hinge member may comprise a hook-shaped structure facilitating the engagement. The hook shape is advantageous since it prevents lateral movement, except for the few millimeters within the hook. The hook should be wide enough to grip the other part. A few millimetres of extra width also ensures that the movement of the second hinge member during opening of the bonnet is not obstructed in any way. For a deployable bonnet, the hook-shaped structure preferably makes it possible for the bonnet to deploy without any interference between the second hinge member and the first portion of the third hinge member.

If the bonnet is deployable, it is preferred that the second hinge member is also arranged to engage with the first portion of the third hinge member when the bonnet is in its deployed position and, when the second hinge member is subjected to a longitudinal force, such that at least part of the longitudinal force is transferable to the first portion by means of the engagement.

It is further preferred that the second hinge member is arranged to engage with the first portion of the third hinge member during movement of the bonnet between the closed position and the deployed position, when the second hinge member is subjected to a longitudinal force, such that at least part of the longitudinal force is transferable to the first portion by means of the engagement. In particular, it is advantageous if the second hinge member is arranged to engage with the first portion of the third hinge member during the whole movement of the bonnet between the closed position and the deployed position.

In an embodiment, the second portion provides a lateral displacement, such that the pivotal connection between the second hinge member and the second portion of the third hinge member is laterally inside of the first portion. This lateral displacement may facilitate mounting of the hinge mechanism to the body structure of the vehicle, e.g. by making it possible for a tool to reach the fastening means of the third hinge member for attaching it to the vehicle body. The lateral displacement may be selected dependent on vehicle configuration, and usually varies from one vehicle model to another. Typically, the lateral displacement is in the range between 0 and 40 mm.

The lateral displacement may be achieved by the second portion of the third hinge member comprising an S-shaped curvature. When subjected to a vertical force, the second portion tends to collapse in the S-shaped curvature.

For the case of a deployable bonnet, the first and second hinge members may be releasably engaged by means of an engaging means holding the first and second hinge members together, when the bonnet is in a closed position or an open position or in transition therebetween. Further, the first and second hinge members may be released, so that they are pivotally movable in relation to each other, when the bonnet is in a deployed position or during deployment. They may for example be attached to each other by means of a shear screw. The shear screw has a weakened portion, which will initiate the break of the shear screw, when the bonnet is deployed.

In a second aspect of the present invention, there is provided a vehicle comprising a hinge mechanism according to any of the embodiments mentioned above, or combinations thereof.

### BRIEF DESCRIPTION OF THE DRAWINGS

The present invention will hereinafter be further explained by means of non-limiting examples with reference to the appended figures wherein:
- Figure 1: is a schematic side view of a front portion of a vehicle with a hinge mechanism according to the invention and illustrating the bonnet in a closed position and in an open position,
- Figure 2: is the front portion of Figure 1 illustrating the bonnet in the closed position and in a deployed position,
- Figure 3: is a perspective top view of a hinge mechanism according to the invention assuming the bonnet is in its closed position,
- Figure 4: is a perspective side view of the hinge mechanism of Figure 3, assuming the bonnet is in its closed position,
- Figure 5: is a perspective side view of the hinge mechanism of Figure 3, assuming the bonnet is in its open position, and
- Figure 6: is a perspective side view of the hinge mechanism of Figure 3, assuming the bonnet is in its deployed position.

### DETAILED DESCRIPTION OF PREFERRED EMBODIMENTS

The invention will, in the following, be exemplified by embodiments. It should however be realized that the embodiments are included in order to explain principles of the invention and not to limit the scope of the invention, defined by the appended claims. Details from two or more of the embodiments may be combined with each other. The words front and rear used below relate to the vehicle, where front is the part coming first in the normal forward driving direction. The words longitudinal, lateral and vertical also relate to the vehicle. Longitudinal is along the normal driving direction. Lateral is perpendicular to the longitudinal direction but in the same horizontal plane, i.e. sideways in the vehicle. Vertical is perpendicular to that plane.

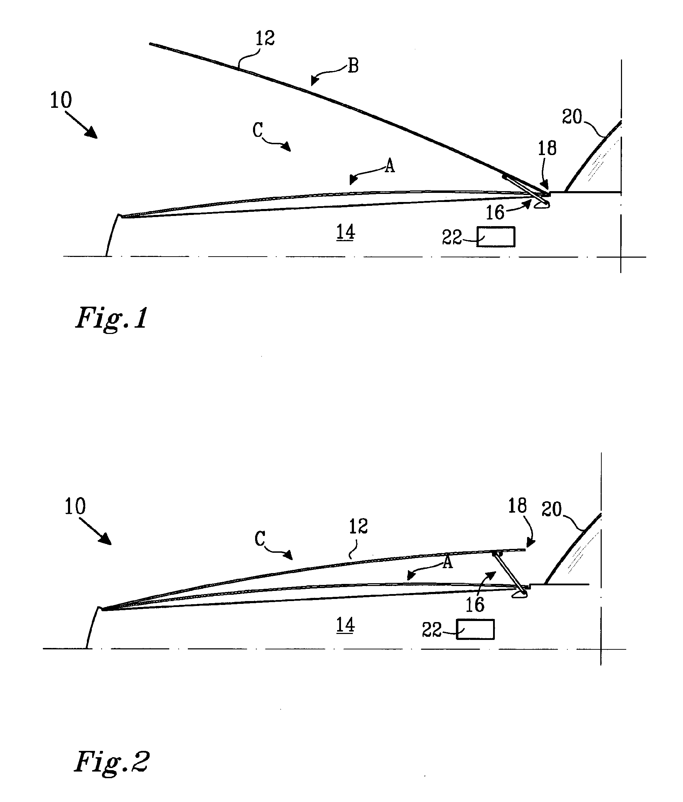

Figure 1 is a schematic side view of a front end of a vehicle 10, here a car. The vehicle is provided with a bonnet 12, which covers an engine compartment 14 and allows access to the engine compartment 14 for maintenance and repair. The bonnet 12 is connected to the vehicle 10 by a hinge mechanism 16, normally one hinge mechanism 16 at each side of the bonnet 12. A rear end 18 of the bonnet 12 is directed towards a windscreen 20 of the vehicle 10. Normally the bonnet 12 is in a closed position A covering the engine compartment 14. The bonnet 12 can be lifted to an open position B allowing normal access to the engine compartment 14. The vehicle 10 is then normally stationary.

The bonnet 12 is connected to an actuator 22, only schematically illustrated, which is positioned somewhere in the vehicle construction, generally beneath the bonnet 12. The actuator 22 is arranged to raise the bonnet 12 at its rear end 18 to a deployed position C after sensor input that the vehicle 10 is about to hit a pedestrian. It should be realized that the actuator 22 may also be activated by, for example, an animal running out in front of the vehicle 10 or a cyclist. Normally, one or more sensors (not shown) are used to detect a collision with the pedestrian. In case of a collision, the actuator 22 is activated. The actuator 22 may be an inflatable member, such as a pedestrian airbag, a pyrotechnical device, a mechanical spring, a compressed-air piston, an electrical lifter, a rack or a lifting arm.

Figure 2 is a schematic side view of the front end of the vehicle 10 showing the bonnet 12 in the deployed position C. The closed position A is also shown as a reference. When the actuator 22 raises the bonnet 12, a distance is formed between the bonnet 12 and hard parts of the engine, allowing deflection of the bonnet 12 without the risk of the head of the pedestrian hitting any hard parts of the engine. The bonnet 12 may be raised at both ends, but normally the rear end 18 is raised to a higher position. The distance formed between the bonnet 12 and the hard parts of the engine is typically between 50 and 130 millimetres.

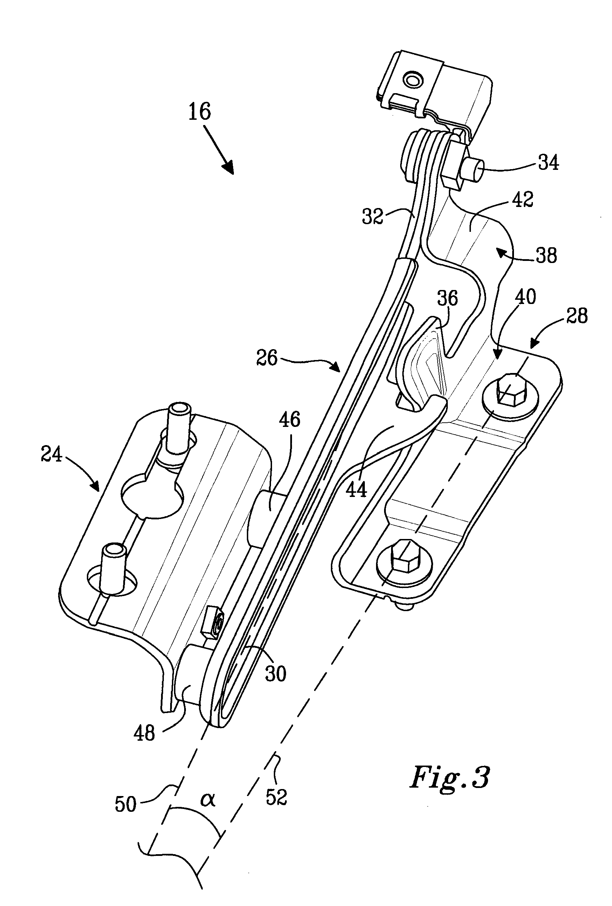

To be able to raise the bonnet 12 to the deployed position C, the hinge mechanism 16 needs to move in a different way in relation to how it moves when the bonnet 12 is opened to the normal opening positioning A. Therefore, the hinge mechanism 16 is adapted for these two different ways of movement, as described below. It should be noted that the hinge mechanism 16 showed in Figures 1 and 2 is not drawn to scale. The details of the hinge mechanism 16 will be described in more detail with reference to Figures 3-6.

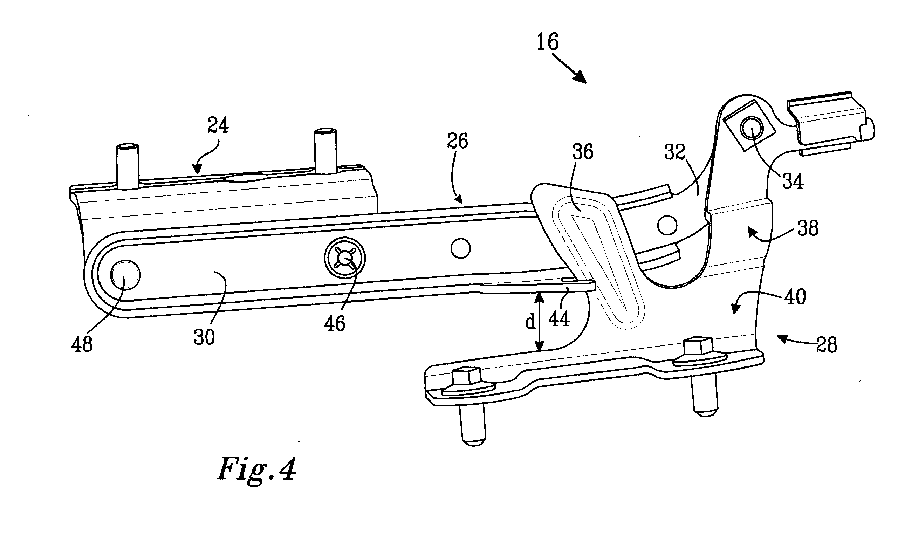

In Figure 3 a perspective top view of the hinge mechanism 16 in accordance with the invention is shown, assuming the bonnet 12, to which the hinge mechanism 16 is arranged, is in the closed position A. Figure 4 shows the corresponding side view. The hinge mechanism 16 comprises a first hinge member 24, a second hinge member 26 and a third hinge member 28. The first hinge member 24 is a piece of material that is fixedly attachable to the bonnet 12 by any suitable fastening means, for example by screwing or by welding. The second hinge member 26 is a hinge arm extending substantially in the longitudinal direction of the vehicle. Its first end 30 is connected to the first hinge member 24. The opposite end of the second hinge member 26, i.e. the second end 32, is pivotally connected to the third hinge member 28 by means of e.g. a pivot pin 34.

The third hinge member 28 comprises a first portion 36, a second portion 38 and a base portion 40. The first portion 36 is adapted to take up forces in the longitudinal direction imparted on it by second hinge member 26, for example longitudinal forces arising in a frontal collision. The second portion 38 is configured to offer less resistance to collapse than the first portion 36, when subjected to a vertical force, e.g. in the case of a pedestrian being thrown onto the bonnet 12. The second portion 38 may therefore comprise a weak zone 42, pre-determined for the collapse. The weak zone 42 may comprise a hole, a notch, a pre-formed bending or be of a thinner material than the remainder of the second portion 38. In Figures 3-4, an S-shaped structure is used. If the vertical load exceeds a predetermined level, the S-shaped structure will collapse and the bonnet 12 will sink. The base portion 40 is adapted to be fixedly attachable to the body structure of the vehicle by any suitable fastening means, for example by screwing or by welding. The first 36 and second 38 portions may be separate from each other, as in the illustrated embodiment, or they may be different regions of the same part. Normally, the first portion 36 is located longitudinally in front of the second portion 38.

A distance d is provided between the under side of the second hinge member 26 and the upper side of the base portion 40 of the third hinge member 28. Purely as an example, d may be between 0 and 40 mm, preferably between 10 and 30 mm and most preferably between 15 and 25 mm assuming the bonnet 12, to which the hinge mechanism 16 is arranged, is in the closed position A. The distance d corresponds to how far the hinge mechanism may collapse in case of a high enough load, i.e. how far the bonnet may sink.

It may further be gleaned from Figures 3-4 that the second hinge member 26 is arranged to engage with the first portion 36 of the third hinge member 28 when the second hinge member 26 is subjected to a longitudinal force. When the bonnet 12 is subjected to a rearward longitudinal force, the force will be transferred via the first hinge member 24 to the second hinge member 26. As a result thereof, the second hinge member 26 will be pushed rearwards until it engages with the first portion 36. Thereafter further rearward motion is hindered, and the bonnet 12 is prevented from intruding into the windscreen 20.

In the shown embodiment, the engagement is secured by a front crash hook 44 adapted to be located at least partly around the first portion 36 of the third hinge member 28 at engagement, but the invention would also work with two opposing flat surfaces. However, the hook shape is advantageous, since it also prevents lateral movement, except for the few millimeters within the front crash hook 44. As an alternative, the first portion 36 may instead be hook-shaped, for example by having a vertical notch, the hook shape gripping around a protrusion from the second hinge member 26.

Further, the first hinge member 24 and the second hinge member 26 are releasably engaged to each other by engaging means 46. The engaging means 46 is adapted to keep the first 24 and second 26 hinge member together when the bonnet 12 is in the closed position A or the open position B, or in transition therebetween. The engaging means 46 is further adapted to release the first hinge member 24 from the second hinge member 26 upon activation from the actuator 22. Accordingly, when the bonnet 12 is moved upwards during deployment in order to reach the deployed position C, the engaging means 46 is released and the first hinge member 24 can move pivotally relative to the second hinge member 26, for example by means of a pivot pin 48. The engaging means may be a shear screw 46, as in the illustrated embodiment. The shear screw 46 has a weakened portion, which will initiate the break of the shear screw 46 when the actuator 22 is activated, thereby allowing the bonnet 12 to be deployed.

In the hinge mechanism 16 shown in Figure 3, it can be seen that there is a slight angle α between the main direction 50 of the second hinge member 26 and the main direction 52 of the third hinge member 28. As mentioned above, the second hinge member 26 is intended to extend substantially in the longitudinal direction of the vehicle, since that direction is the most appropriate for taking up longitudinal forces. The slight angle α has been chosen to facilitate mounting of the hinge mechanism 16 to the body structure of the vehicle. Using the slight angle α may for example facilitate that a tool can reach the fastening means of the third hinge member 28 for attaching it to the vehicle body. The slight angle α is in this example achieved by the second portion 38 of the third hinge member 28 providing a lateral displacement, such that the pivotal connection 34 between the second hinge member 26 and the second portion 38 of the third hinge member 28 is laterally inside of the first portion 36. In the example of Figures 3-4, the S-shaped structure of the weak zone 42 provides this lateral displacement. The slight angle α is selected dependent on vehicle configuration and usually varies from one vehicle model to another. The slight angle α is typically a few degrees and may in many cases be zero, i.e. the main direction 50 of the second hinge member 26 and the main direction 52 of the third hinge member 28 are parallel to each other. Even if the hinge mechanism 16 of Figures 3-4 exemplifies the combination of a slight angle α and a lateral displacement, they may also be used independently of each other.

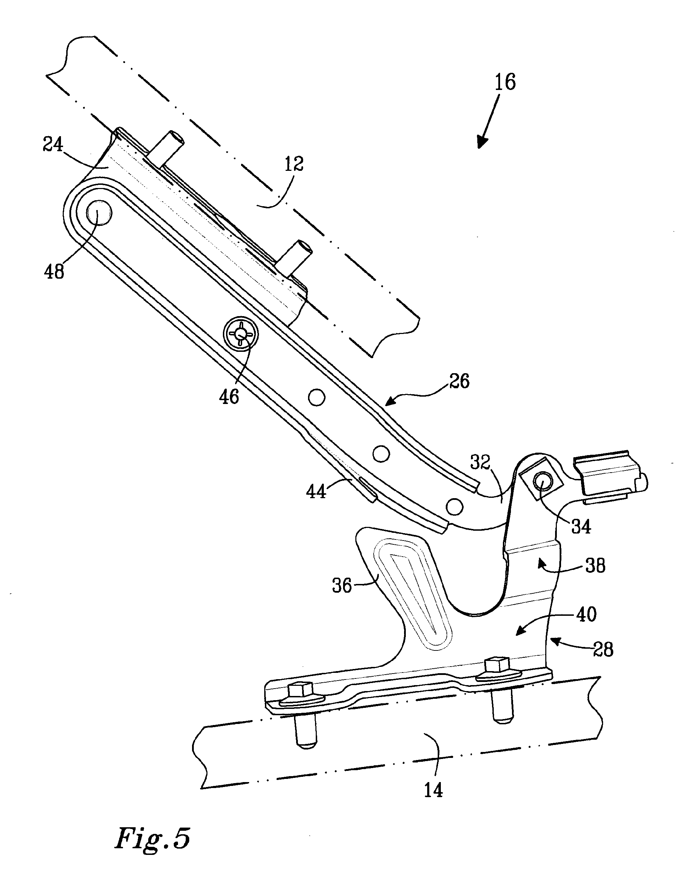

Figure 5 shows the position of the hinge mechanism 16 when the bonnet 12 is in its normal open position B. In order to reach this position, the second hinge member 26 pivots in relation to the third hinge member 28 around the pivot pin 34. The first hinge member 24 is releasably engaged with the second hinge member 26 by means of the engaging means 46. During the normal opening or closing operation of the bonnet 12, the first portion 36 does not restrict the movement of the second hinge member 26. In particular, the front crash hook 44 moves freely without engaging with the first portion 36.

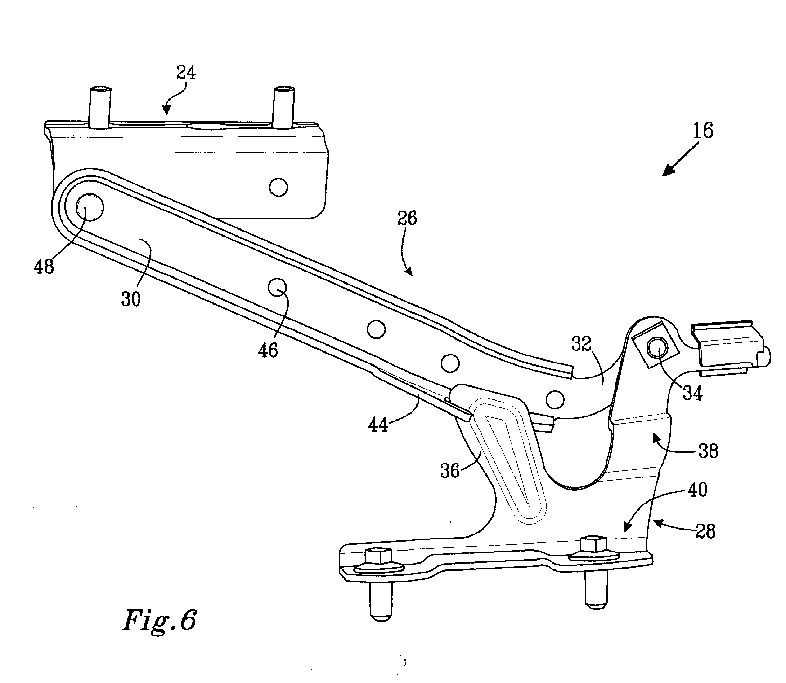

In Figure 6 a perspective view of the hinge mechanism 16 in accordance with the invention is shown when the bonnet 12 has been moved to the deployed position C. In the event that the pedestrian is hit and the actuator 22 is activated, at least the rear end 18 of the bonnet 12 will be deployed. When the bonnet 12 is moved in an upward direction, the engaging means 46 is released and the first hinge member 24 and the second hinge member 26 are released from each other and become pivotally movable relative to each other around a pivot point, here defined by the pivot pin 48. The second hinge member 26 also pivots at its opposite end, the second end 32, around the pivot pin 34 during deployment of the bonnet 12.

It is further seen in Figure 6 that the front crash hook 44 can grip around the first portion 36 of the third hinge member 28 during the deployment of the bonnet 12. Thereby, a longitudinal force may be transferred to the first portion 36 also during the deployment movement and not only at the end position of the hinge mechanism 16 corresponding to the closed bonnet A or the deployed bonnet C.

Further modifications of the invention within the scope of the appended claims are feasible. As such, the present invention should not be considered as limited by the embodiments and figures described herein. Rather, the full scope of the invention should be determined by the appended claims, with reference to the description and drawings.

Although the invention is exemplified by a vehicle comprising a deployable bonnet, the hinge mechanism of the invention would also be suitable for a vehicle with a normal non-deployable bonnet. In that case, there should preferably be a free space between the bonnet and any hard engine parts such that the bonnet may collapse, thereby absorbing energy without the head of the pedestrian thrown onto the bonnet hitting any hard engine parts.

The illustrated example shows a bonnet which is opened at its front end, but there are also vehicles having a bonnet which is opened at its rear end, i.e. at its end adjacent to the windscreen. In that case, there will be one or more bonnet latches located at the rear end of the bonnet used for holding the bonnet in the closed position. In such a case, the functions of the hinge mechanism described above could be incorporated into the bonnet latch. In order to open the bonnet in a normal way to access the engine compartment, there are also hinges arranged at the front end of such a bonnet. In the case that a rear-opened bonnet is deployable, a hinge mechanism providing deployment may be arranged at the rear end of the bonnet, possibly incorporated into the bonnet latch. Such a hinge mechanism may be according to an embodiment of the invention.

Moreover, it is to be noted that the bonnet is in American English often termed the hood.

## Claims

1. A hinge mechanism (16) for a bonnet (12) of a vehicle (10), in use said hinge mechanism (16) providing a hinged connection between said bonnet (12) and the body structure of said vehicle (10), said vehicle (10) having a longitudinal direction and a vertical direction, said hinge mechanism (16) comprising
- a first hinge member (24) connectable to said bonnet (12),
- a second hinge member (26) having a first end (30) and a second end (32),
- a third hinge member (28) connectable to said body structure,
said first end (30) of said second hinge member (26) being connected to said first hinge member (24),
**characterized by**
said third hinge member (28) comprising a first portion (36) and a second portion (38),
said second end (32) of said second hinge member (26) being pivotally connected to said third hinge member (28) at said second portion (38),
said second hinge member (26) further being arranged to engage with said first portion (36) of said third hinge member (28) when said second hinge member (26) is subjected to a longitudinal force, such that at least part of said longitudinal force is transferable to said first portion (36) by means of the engagement,
said first portion (36) being adapted to take up said force in the longitudinal direction imparted on said first portion (36) by said second hinge member (26), and
said second portion (38) offering less resistance to collapse than said first portion (36) in response to a vertical force.

2. The hinge mechanism (16) according to claim 1, wherein said first portion (36) is adapted to withstand a longitudinal force of at least 4 kN, preferably at least 10 kN, and most preferably at least 15 kN.

3. The hinge mechanism (16) according to claim 1 or 2, wherein said second portion (38) is arranged to collapse when subjected to a vertical force of over 2 kN, preferably over 1.5 kN, and most preferably over 1 kN.

4. The hinge mechanism (16) according to any one of the preceding claims, wherein said hinge mechanism (16) is arranged to allow said bonnet (12) to be raised to a deployed position (C).

5. The hinge mechanism (16) according to any one of the preceding claims, wherein said third hinge member (28) further comprises a base portion (40), said base portion (40) being connectable to said body structure of said vehicle (10).

6. The hinge mechanism (16) according to any one of the preceding claims, wherein said first portion (36) and said second portion (38) of said third hinge member (28) are two separate portions linked together by said base portion (40).

7. The hinge mechanism (16) according to claim 5 or 6, wherein said second portion (38) is located vertically above at least part of said base portion (40), when mounted in said vehicle (10).

8. The hinge mechanism (16) according to any one of the preceding claims, wherein said second hinge member (26) and/or said first portion (36) of said third hinge member (28) is/are formed to prevent substantial lateral movement of said second hinge member (26) relative to said third hinge member (28), when engaged with each other.

9. The hinge mechanism (16) according to any one of the preceding claims, wherein said second hinge member (26) and/or said first portion (36) of said third hinge member (28) comprises a hook-shaped structure facilitating said engagement.

10. The hinge mechanism (16) according to any one of claims 4-9, wherein said second hinge member (26) is arranged to engage with said first portion (36) of said third hinge member (28) also when the bonnet (12) is in its deployed position (C), when said second hinge member (26) is subjected to a longitudinal force, such that at least part of said longitudinal force is transferable to said first portion (36) by means of the engagement.

11. The hinge mechanism (16) according to any one of claims 4-10, wherein said second hinge member (26) is arranged to engage with said first portion (36) of said third hinge member (28) during movement of the bonnet (12) between said closed position (A) and said deployed position (C), when said second hinge member (26) is subjected to a longitudinal force, such that at least part of said longitudinal force is transferable to said first portion (36) by means of the engagement.

12. The hinge mechanism (16) according to any one of the preceding claims, wherein said second portion (38) provides a lateral displacement, such that the pivotal connection (34) between said second hinge member (26) and said second portion (38) of said third hinge member (28) is laterally inside of said first portion (36).

13. The hinge mechanism (16) according to any one of the preceding claims, wherein said second portion (38) of said third hinge member (28) comprises an S-shaped curvature.

14. The hinge mechanism (16) according to any one of claims 4-13, wherein said first and second hinge members (24, 26) are releasably engaged by means of an engaging means (46) holding said first and second hinge members (24, 26) together, when said bonnet (12) is in a closed position (A) or an open position (B) or in transition therebetween, and releasing said first and second hinge members (24, 26), so that they are pivotally movable in relation to each other, when said bonnet (12) is in a deployed position (C) or during deployment.

15. A vehicle (10) comprising a hinge mechanism (16) according to any one of the preceding claims.

## Patentansprüche

1. Scharniermechanismus (16) für eine Motorhaube (12) eines Fahrzeugs (10), wobei der Scharniermechanismus (16) im Gebrauch eine angelenkte Verbindung zwischen der Motorhaube (12) und der Karosseriestruktur des Fahrzeugs (10) schafft, wobei das Fahrzeug (10) eine longitudinale Richtung und eine vertikale Richtung besitzt, wobei der Scharniermechanismus (16) Folgendes umfasst:
- ein erstes Scharnierelement (24), das mit der Motorhaube (12) verbunden werden kann,
- ein zweites Scharnierelement (26), das ein erstes Ende (30) und ein zweites Ende (32) besitzt,
- ein drittes Scharnierelement (28), das mit der Karosseriestruktur verbunden werden kann,
wobei das erste Ende (30) des zweiten Scharnierelements (26) mit dem ersten Scharnierelement (24) verbunden ist,
**dadurch gekennzeichnet, dass**
das dritte Scharnierelement (28) einen ersten Abschnitt (36) und einen zweiten Abschnitt (38) aufweist,
das zweite Ende (32) des zweiten Scharnierelements (26) mit dem dritten Scharnierelement (28) bei dem zweiten Abschnitt (38) gelenkig verbunden ist,
das zweite Scharnierelement (26) ferner dafür ausgelegt ist, mit dem ersten Abschnitt (36) des dritten Scharnierelements (28) in Eingriff zu gelangen, wenn das zweite Scharnierelement (26) einer longitudinalen Kraft unterworfen wird, so dass wenigstens ein Teil der longitudinalen Kraft mittels des Eingriffs an den ersten Abschnitt (36) übertragen werden kann,
der erste Abschnitt (36) dafür ausgelegt ist, die Kraft in der longitudinalen Richtung, die auf den ersten Abschnitt (36) durch das zweite Scharnierelement (26) ausgeübt wird, aufzunehmen, und
der zweite Abschnitt (38) als Reaktion auf eine vertikale Kraft einen geringeren Widerstand gegenüber einem Zusammenklappen bietet als der erste Abschnitt (36).

2. Scharniermechanismus (16) nach Anspruch 1, wobei der erste Abschnitt (36) dafür ausgelegt ist, einer longitudinalen Kraft von wenigstens 4 kN, vorzugsweise wenigstens 10 kN und am stärksten bevorzugt wenigstens 15 kN zu widerstehen.

3. Scharniermechanismus (16) nach Anspruch 1 oder 2, wobei der zweite Abschnitt (38) dafür ausgelegt ist, zusammenzuklappen, wenn er einer vertikalen Kraft von mehr als 2 kN, vorzugsweise mehr als 1,5 kN und am stärksten bevorzugt mehr als 1 kN unterworfen wird.

4. Scharniermechanismus (16) nach einem der vorhergehenden Ansprüche, wobei der Scharniermechanismus (16) dafür ausgelegt ist, ein Anheben der Motorhaube (12) in eine hochgestellte Stellung (C) zu erlauben.

5. Scharniermechanismus (16) nach einem der vorhergehenden Ansprüche, wobei das dritte Scharnierelement (28) ferner einen Basisabschnitt (40) aufweist, wobei der Basisabschnitt (40) mit der Karosseriestruktur des Fahrzeugs (10) verbunden werden kann.

6. Scharniermechanismus (16) nach einem der vorhergehenden Ansprüche, wobei der erste Abschnitt (36) und der zweite Abschnitt (38) des dritten Scharnierelements (28) zwei getrennte Abschnitte sind, die durch den Basisabschnitt (40) miteinander verbunden sind.

7. Scharniermechanismus (16) nach Anspruch 5 oder 6, wobei sich der zweite Abschnitt (38) vertikal über wenigstens einem Teil des Basisabschnitts (40) befindet, wenn er in dem Fahrzeug (10) montiert ist.

8. Scharniermechanismus (16) nach einem der vorhergehenden Ansprüche, wobei das zweite Scharnierelement (26) und/oder der erste Abschnitt (36) des dritten Scharnierelements (28) ausgebildet sind, um eine wesentliche seitliche Bewegung des zweiten Scharnierelements (26) relativ zu dem dritten Scharnierelement (28) zu verhindern, wenn sie miteinander in Eingriff sind.

9. Scharniermechanismus (16) nach einem der vorhergehenden Ansprüche, wobei das zweite Scharnierelement (26) und/oder der erste Abschnitt (36) des dritten Scharnierelements (28) eine hakenförmige Struktur aufweisen, die den Eingriff erleichtern.

10. Scharniermechanismus (16) nach einem der Ansprüche 4-9, wobei das zweite Scharnierelement (26) dafür ausgelegt ist, mit dem ersten Abschnitt (36) des dritten Scharnierelements (28) auch dann in Eingriff zu gelangen, wenn die Motorhaube (12) in ihrer hochgestellten Stellung (C) ist, wenn das zweite Scharnierelement (26) einer longitudinalen Kraft unterworfen wird, so dass wenigstens ein Teil der longitudinalen Kraft mittels des Eingriffs an den ersten Abschnitt (36) übertragen werden kann.

11. Scharniermechanismus (16) nach einem der Ansprüche 4-10, wobei das zweite Scharnierelement (26) dafür ausgelegt ist, mit dem ersten Abschnitt (36) des dritten Scharnierelements (28) während der Bewegung der Motorhaube (12) zwischen ihrer geschlossenen Stellung (A) und ihrer hochgestellten Stellung (C) in Eingriff zu gelangen, wenn das zweite Scharnierelement (26) einer longitudinalen Kraft unterworfen wird, so dass wenigstens ein Teil der longitudinalen Kraft mittels des Eingriffs an den ersten Abschnitt (36) übertragen werden kann.

12. Scharniermechanismus (16) nach einem der vorhergehenden Ansprüche, wobei der zweite Abschnitt (38) eine seitliche Verlagerung schafft, derart, dass die gelenkige Verbindung (34) zwischen dem zweiten Scharnierelement (26) und dem zweiten Abschnitt (38) des dritten Scharnierelements (28) seitlich innerhalb des ersten Abschnitts (36) vorhanden ist.

13. Scharniermechanismus (16) nach einem der vorhergehenden Ansprüche, wobei der zweite Abschnitt (38) des dritten Scharnierelements (28) eine S-förmige Krümmung aufweist.

14. Scharniermechanismus (16) nach einem der Ansprüche 4-13, wobei das erste und das zweite Scharnierelement (24, 26) mittels eines Eingriffmittels (46) in einem lösbaren Eingriff sind, das das erste und das zweite Scharnierelement (24, 26) zusammenhält, wenn die Motorhaube (12) in einer geschlossenen Stellung (A) oder einer geöffneten Stellung (B) oder in einer Position dazwischen ist, und das erste und das zweite Scharnierelement (24, 26) freigibt, so dass sie relativ zueinander schwenkbar beweglich sind, wenn die Motorhaube (12) in einer hochgestellten Stellung ist (C) oder gerade hochgestellt wird.

15. Fahrzeug (10), das einen Scharniermechanismus (16) nach einem der vorhergehenden Ansprüche umfasst.

## Revendications

1. Mécanisme de charnière (16) pour un capot (12) d'un véhicule (10), ledit mécanisme de charnière (16), pendant l'utilisation, assurant une connexion articulée entre ledit capot (12) et la structure de caisse dudit véhicule (10), ledit véhicule (10) ayant une direction longitudinale et une direction verticale, ledit mécanisme de charnière (16) comprenant :
- un premier organe de charnière (24) pouvant être connecté audit capot (12),
- un deuxième organe de charnière (26) ayant une première extrémité (30) et une deuxième extrémité (32),
- un troisième organe de charnière (28) pouvant être connecté à ladite structure de caisse, ladite première extrémité (30) dudit deuxième organe de charnière (26) étant connectée audit premier organe de charnière (24),
**caractérisé en ce que**
ledit troisième organe de charnière (28) comprend une première portion (36) et une deuxième portion (38).
ladite deuxième extrémité (32) dudit deuxième organe de charnière (26) étant connectée de manière pivotante audit troisième organe de charnière (28) au niveau de ladite deuxième portion (38),
ledit deuxième organe de charnière (26) étant en outre agencé de manière à s'engager avec ladite première portion (36) dudit troisième organe de charnière (28) lorsque ledit deuxième organe de charnière (26) est soumis à une force longitudinale, de telle sorte qu'au moins une partie de ladite force longitudinale puisse être transférée à ladite première portion (36) au moyen de l'engagement,
ladite première portion (36) étant prévue pour reprendre ladite force dans la direction longitudinale conférée à ladite première portion (36) par ledit deuxième organe de charnière (26), et
ladite deuxième portion (38) offrant moins de résistance à l'affaissement que ladite première portion (36) en réponse à une force verticale.

2. Mécanisme de charnière (16) selon la revendication 1, dans lequel ladite première portion (36) est prévue pour résister à une force longitudinale d'au moins 4 kN, de préférence d'au moins 10 kN, et plus préférablement d'au moins 15 kN.

3. Mécanisme de charnière (16) selon la revendication 1 ou 2, dans lequel ladite deuxième portion (38) est prévue pour s'affaisser lorsqu'elle est soumise à une force verticale supérieure à 2 kN, de préférence supérieure à 1,5 kN, et plus préférablement supérieure à 1 kN.

4. Mécanisme de charnière (16) selon l'une quelconque des revendications précédentes, dans lequel ledit mécanisme de charnière (16) est prévu pour permettre audit capot (12) d'être relevé dans une position déployée (C).

5. Mécanisme de charnière (16) selon l'une quelconque des revendications précédentes, dans lequel ledit troisième organe de charnière (28) comprend en outre une portion de base (40), ladite portion de base (40) pouvant être connectée à ladite structure de caisse dudit véhicule (10).

6. Mécanisme de charnière (16) selon l'une quelconque des revendications précédentes, dans lequel ladite première portion (36) et ladite deuxième portion (38) dudit troisième organe de charnière (28) sont deux portions séparées reliées l'une à l'autre par ladite portion de base (40).

7. Mécanisme de charnière (16) selon la revendication 5 ou 6, dans lequel ladite deuxième portion (38) est située verticalement au-dessus d'au moins une partie de ladite portion de base (40) lorsqu'elle est montée dans ledit véhicule (10).

8. Mécanisme de charnière (16) selon l'une quelconque des revendications précédentes, dans lequel ledit deuxième organe de charnière (26) et/ou ladite première portion (36) dudit troisième organe de charnière (28) est/sont formé(s) de manière à empêcher un mouvement latéral substantiel dudit deuxième organe de charnière (26) par rapport audit troisième organe de charnière (28) lorsqu'ils sont engagés l'un avec l'autre.

9. Mécanisme de charnière (16) selon l'une quelconque des revendications précédentes, dans lequel ledit deuxième organe de charnière (26) et/ou ladite première portion (36) dudit troisième organe de charnière (28) comprennent une structure en forme de crochet facilitant ledit engagement.

10. Mécanisme de charnière (16) selon l'une quelconque des revendications 4 à 9, dans lequel ledit deuxième organe de charnière (26) est prévu pour s'engager avec ladite première portion (36) dudit troisième organe de charnière (28) aussi lorsque le capot (12) est dans sa position déployée (C), quand ledit deuxième organe de charnière (26) est soumis à une force longitudinale, de telle sorte qu'au moins une partie de ladite force longitudinale puisse être transférée à ladite première portion (36) au moyen de l'engagement.

11. Mécanisme de charnière (16) selon l'une quelconque des revendications 4 à 10, dans lequel ledit deuxième organe de charnière (26) est prévu pour s'engager avec ladite première portion (36) dudit troisième organe de charnière (28) au cours du mouvement du capot (12) entre ladite position fermée (A) et ladite position déployée (C), lorsque ledit deuxième organe de charnière (26) est soumis à une force longitudinale, de telle sorte qu'au moins une partie de ladite force longitudinale puisse être transférée à ladite première portion (36) au moyen de l'engagement.

12. Mécanisme de charnière (16) selon l'une quelconque des revendications précédentes, dans lequel ladite deuxième portion (38) fournit un déplacement latéral, de telle sorte que la connexion pivotante (34) entre ledit deuxième organe de charnière (26) et ladite deuxième portion (38) dudit troisième organe de charnière (28) soit latéralement à l'intérieur de ladite première portion (36).

13. Mécanisme de charnière (16) selon l'une quelconque des revendications précédentes, dans lequel ladite deuxième portion (38) dudit troisième organe de charnière (28) comprend une courbure en forme de S.

14. Mécanisme de charnière (16) selon l'une quelconque des revendications 4 à 13, dans lequel lesdits premier et deuxième organes de charnière (24, 26) sont engagés de manière amovible par un moyen d'engagement (46) retenant lesdits premier et deuxième organes de charnière (24, 26) ensemble, lorsque ledit capot (12) est dans une position fermée (A), ou une position ouverte (B), ou en transition entre ces positions, et libérant lesdits premier et deuxième organes de charnière (24, 26) de telle sorte qu'ils puissent pivoter l'un par rapport à l'autre lorsque ledit capot (12) est dans une position déployée (C) ou au cours du déploiement.

15. Véhicule (10) comprenant un mécanisme de charnière (16) selon l'une quelconque des revendications précédentes.
